# EUROPEAN PATENT APPLICATION

(11) **EP 0 778 423 A2**
(43) Date of publication of application: **11.06.1997**
(21) Application number: 96203408.8
(22) Date of filing: 02.12.1996
(51) Int. Cl.: F16C 33/76, F16C 23/08

(54) **Seal gasket for supports for self-aligning bearings**

(30) Priority: 21.12.1995 IT RE950062 U
(71) Applicant: Marbett S.p.A., 42015 Correggio (Reggio Emilia) (IT)
(72) Inventor: Ferrari, Fabrizio, 42015 Correggio (Reggio Emilia) (IT); Pinotti, Lorenzo, 42015 Correggio (Reggio Emilia) (IT)
(74) Representative: Corradini, Corrado

(57) **Abstract**

A seal gasket for self-aligning bearing supports comprising a casing (1) provided with a spherical housing (2) for a bearing (3) of conjugate outer shape, and a cover (5) which can be snap-mounted onto said casing and comprises a seat (7) for receiving an elastic seal ring (8), said ring having a right section which is of non-circular shape and is provided, at least in those two opposing regions intended to make contact with said casing and said cover respectively, with at least two relatively thin continuously integral circumferential lips.

## Description

In the construction of machines of various kinds and in the assembly of conveyors in general, where problems of alignment of shaft supports usually arise, the normal use of self-aligning bearings, which are known to be very costly, has been replaced by special bearing supports housing a usual ball bearing the outer race of which can undergo small oscillations relative to the support mounting axis.

However, this known solution encounters problems when the bearing has to operate in contaminated environments, in that a support able to enclose the bearing in a perfectly sealed manner has not yet been made available.

The bearing support generally consists of a casing closed by a cover.

The casing and cover are generally formed of synthetic material, the seal between the casing and cover being made by a usual rubber ring gasket of circular cross-section.

As the cover is snap-mounted onto the casing, the seal must be achieved without substantial deformation of the cross-section of the ring, otherwise this latter would exert an axial thrust which would tend to separate the cover from its coupling seat.

On the other hand, the sealing effect of the ring gasket depends precisely on its deformation, with the result that the sealing problem remains substantially unsolved.

The object of the present patent is to provide a ring gasket able to ensure a seal between the cover and casing of bearing supports of the type described in the introduction.

This object is attained by a ring gasket the right section through which has a shape other than circular and comprises, at least on those regions situated on one and the other side of the plane in which the ring lies, at least two relatively thin circumferential lips, and preferably a third lip positioned between the two.

By virtue of said configuration the gasket deforms without generating axial components such as to compromise the stability of the cover on the casing, ensuring at the same time a perfect seal because of the fact that said lips provide a path of labyrinth type.

Specifically, when the ring is in its undeformed state said right section has a shape which can be inscribed within a polygon, typically a quadrilateral and preferably a trapezoidal quadrilateral.

Said lips have a cross-section which tapers towards their free end, for example of triangular shape.

The merits and constructional characteristics of the invention will be apparent from the detailed description thereof given hereinafter with reference to the figures of the accompanying drawings, in which:
Figure 1 is an exploded sectional view of a support-bearing unit;
Figure 2 is a view of the said unit assembled; and
Figure 3 is an enlarged view of the detail shown in the circle III of Figure 1.

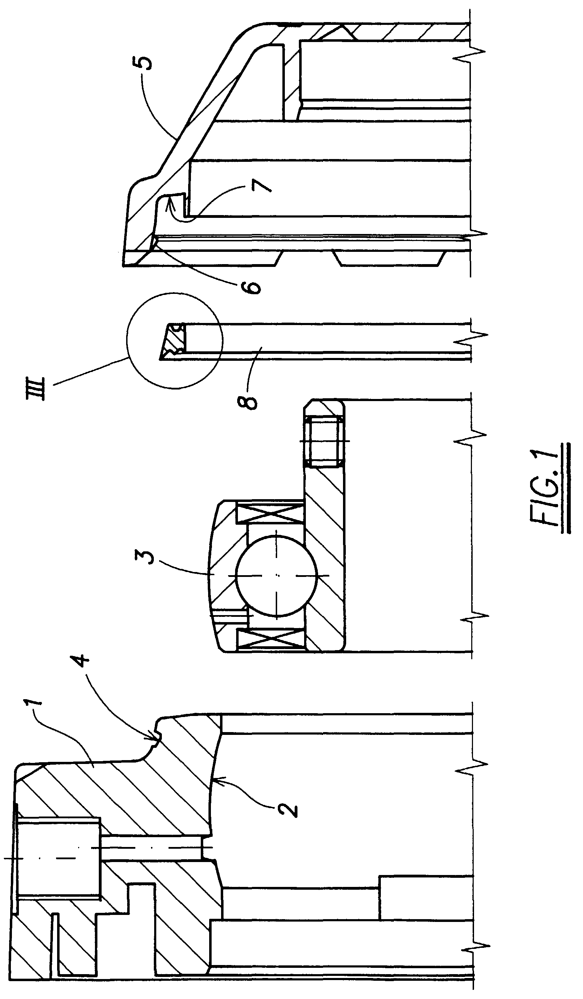

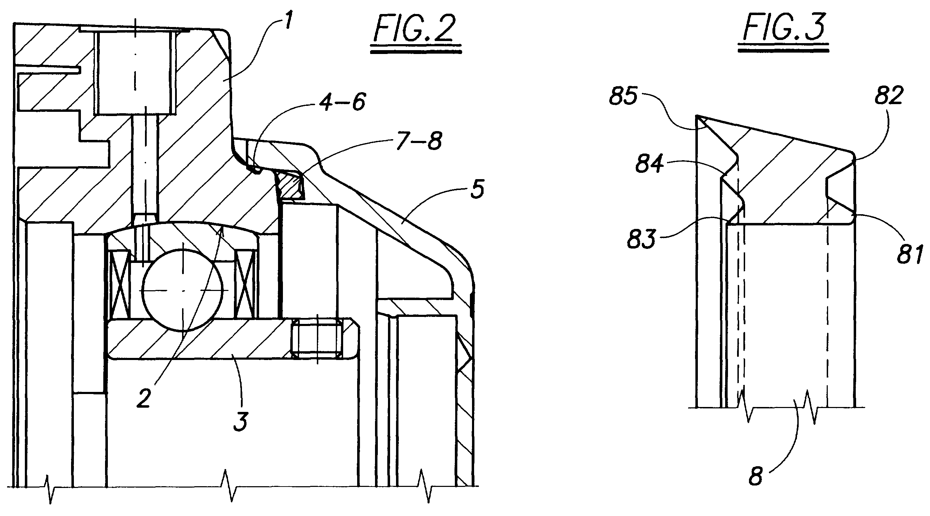

Figures 1 and 2 show a casing 1 having a spherical seat 2 for receiving an outer ring, in the form of a spherical segment, of the bearing 3.

On the right hand side of said figures the casing 1 has a small suitably shaped outer annular cavity 4, arranged to snap-receive and retain the cover 5.

For this purpose this latter is provided with a raised inner annular edge 6 able to snap-engage said annular cavity 4 to maintain the cover in position.

Adjacent to said raised edge 6, the cover comprises a seat 7 for an annular seal gasket 8.

This latter when in its undeformed configuration, shown in Figure 3, has a cross-section which can be inscribed within a trapezoidal quadrilateral.

One side of said quadrilateral, namely that facing the cover 5, comprises two raised portions 81 and 82 defining a groove, the side opposite the preceding, ie that facing the casing 5, being provided with three raised portions 83, 84 and 85 defining two grooves.

Of said raised portions, the first two are of triangular shape with the same height and have a rounded vertex, whereas the other three, also triangular, have their vertex pointed and have a height which gradually increases proceeding radially outwards with reference to the ring 8.

Specifically, the height difference between the inner raised portion 83 and the intermediate raised portion 84 is much less than that between this latter and the outer raised portion 85.

Two said raised portions 81 and 82 are located at the opposing ends of the respective ring attachment side, as are the two corresponding raised portions 83 and 85 on the opposite side, with the intermediate raised portion 84 in a substantially central position between these latter.

The merits and advantages of the invention are apparent from the aforegoing and from an examination of the accompanying figures.

## Claims

1. A seal gasket for self-aligning bearing supports comprising a casing (1) provided with a spherical housing (2) for a bearing (3) of conjugate outer shape, and a cover (5) which can be snap-mounted onto said casing and comprises a seat (7) for receiving an elastic seal ring (8), characterised in that said ring has a right section which is of non-circular shape and is provided, at least in those two opposing regions intended to make contact with said casing and said cover respectively, with at least two relatively thin continuously integral circumferential lips.

2. A gasket as claimed in claim 1, characterised in that when the ring is in its undeformed state said right section has a shape inscribable within a polygon.

3. A gasket as claimed in claim 2, characterised in that said polygon is a quadrilateral.

4. A gasket as claimed in claim 3, characterised in that said quadrilateral is of trapezoidal form.

5. A gasket as claimed in claim 1, characterised in that said at least two circumferential lips are situated along respectively the inner and outer edges of the corresponding region of attachment to the body of the ring.

6. A gasket as claimed in claim 1, characterised in that on that side of the ring which faces said casing there is provided at least one other lip (84), symmetrically positioned between the respective inner lip (83) and outer lip (85).

7. A gasket as claimed in claim 6, characterised in that said lips (83), (84), (85) facing the casing have a height which gradually increases proceeding radially outwards with reference to said ring.

8. A gasket as claimed in claim 1, characterised in that the lips (81), (82) facing said cover have the same height.

9. A gasket as claimed in claim 1, characterised in that said lips (81), (82), (83), (84), (85) have a cross-section which tapers towards the free end of the respective lip.

10. A gasket as claimed in claim 9, characterised in that said cross-section is of triangular form.

11. A gasket as claimed in claim 10, characterised in that at least those lips facing the cover have a rounded vertex.
